# EUROPÄISCHE PATENTANMELDUNG

(11) **EP 4 570 054 A1**
(43) Veröffentlichungstag der Anmeldung: **18.06.2025**
(21) Anmeldenummer: 24217828.3
(22) Anmeldetag: 05.12.2024
(51) Int. Cl.: A01D 43/10, A01D 34/00

(54) **MÄHWERK MIT KONDITIONIERWALZEN UND MITTELN ZUR BESTIMMUNG DES ERNTEGUTVOLUMENSTROMS**

(30) Priorität: 11.12.2023 DE 102023134642
(71) Anmelder: CLAAS Saulgau GmbH, 88348 Bad Saulgau (DE)
(72) Erfinder: Frye, Simon, 88348 Bad Saulgau (DE); Pflanze, Sascha, 88348 Braunenweiler (DE); Knupfer, Fabian, 88400 Biberach (DE)

(57) **Zusammenfassung**

Die Erfindung betrifft ein Mähwerk (1), mit mehreren Mähorganen, die unter Ausbildung eines Mähbalkens (2) nebeneinander positioniert sind und mit einem in Gutflussrichtung von gemähtem Erntegut (3) gesehen hinter dem Mähbalken (2) angeordneten Walzenaufbereiter (4), der eine obere Aufbereitungswalze (5) und eine untere Aufbereitungswalze (6) aufweist, wobei ein Spalt (s) zwischen den Aufbereitungswalzen (5, 6), durch welchen das Erntegut (3) hindurch transportiert wird, abhängig von einer Menge des Ernteguts (3) veränderlich ist, und wobei Mittel zur Ermittlung einer Weite des Spaltes (s) und Mittel zur Ermittlung einer Fahrgeschwindigkeit (V) oder Erntegeschwindigkeit (V) sowie eine Steuerungseinrichtung (9) vorgesehen sind, die dazu eingerichtet ist, aus der Weite des Spaltes (s), einer Breite (b) der Aufbereitungswalzen (5, 6) und der Fahrgeschwindigkeit (V) oder der Erntegeschwindigkeit (V) einen Volumenstrom des Erntegutes (3) zu berechnen.

## Beschreibung

Die Erfindung betrifft ein Mähwerk gemäß dem Oberbegriff des Patentanspruchs 1.

Aus DE 10 2020 124 992 A1 ist ein Mähwerk mit mehreren Mähorganen bekannt, die unter Ausbildung eines Mähbalkens nebeneinander positioniert sind, mit einem in Gutflussrichtung von gemähtem Erntegut gesehen hinter dem Mähbalken angeordneten Walzenaufbereiter, der eine obere Aufbereitungswalze und eine untere Aufbereitungswalze aufweist, wobei die untere Aufbereitungswalze um eine untere, ortsfeste Drehachse drehbar ist, wobei die obere Aufbereitungswalze um eine obere, verlagerbare Drehachse derart drehbar ist, dass in Folge einer Verlagerung der oberen Drehachse relativ zur unteren Drehachse ein Spalt zwischen den Aufbereitungswalzen veränderlich ist.

Beim Ernten von Gras, Luzernen oder ähnlichen Erntegütern mit einem Mähwerk, das von einem Traktor als Trägerfahrzeug betrieben wird, sind Informationen über die gemähten Erntemengen erst beim Wiegen der Abfahrfahrzeuge verfügbar.

Hiervon ausgehend ist es die Aufgabe der Erfindung, ein neuartiges Mähwerk zu schaffen.

Diese Aufgabe wird erfindungsgemäß durch die kennzeichnenden Merkmale des Patentanspruchs 1 gelöst.

Ein erfindungsgemäßes Mähwerk weist mehrere nebeneinander positionierte Mähorgane auf, die einen Mähbalken ausbilden und umfasst einen in Gutflussrichtung von gemähtem Erntegut gesehen hinter dem Mähbalken angeordneten Walzenaufbereiter auf, der eine obere und eine untere Aufbereitungswalze aufweist, zwischen welchen ein Spalt gebildet wird, durch welchen das Erntegut hindurch transportiert wird. Die Weite des Spaltes verändert sich abhängig von der Menge des Ernteguts, wobei erfindungsgemäß Mittel zur Ermittlung der Weite des Spaltes und Mittel zur Ermittlung der Fahrgeschwindigkeit oder Erntegeschwindigkeit sowie eine Steuerungseinrichtung vorgesehen sind, und die Steuerungseinrichtung dazu eingerichtet ist, aus der Weite des Spaltes, einer Breite der Aufbereitungswalzen und der Fahrgeschwindigkeit oder der Erntegeschwindigkeit einen Volumenstrom des Erntegutes zu berechnen.

Nach einer vorteilhaften Weiterbildung ist die untere Aufbereitungswalze um eine untere, ortsfeste Drehachse drehbar und die obere Aufbereitungswalze zur Anpassung des Spaltes an die Menge des Erntegutes um eine obere, verlagerbare Drehachse drehbar, so dass die obere Drehachse relativ zur unteren Drehachse verlagerbar ist, wobei die obere Drehachse dazu schwenkbar an Hebeln angeordnet ist und ein Winkelsensor vorgesehen ist, der die Auslenkung eines Hebels kontinuierlich erfasst und die erfassten Messsignale an die Steuerungseinrichtung übermittelt.

Nach einer weiteren vorteilhaften Weiterbildung ist die obere Aufbereitungswalze an ihren beiden Enden schwenkbar an einem Hebel gelagert und an jedem Hebel ist ein Winkelsensor vorgesehen, die beide die erfassten Messsignale an die Steuerungseinrichtung übermitteln, woraus diese vorteilhaft eine etwaige Verkippung oder Schrägstellung der oberen Aufbereitungswalze ermittelt und diese bei der Berechnung des Volumenstroms des Ernteguts berücksichtigt. Dadurch kann eine ungleichmäßige Verteilung des Ernteguts bzw. der Schichtdicke des Ernteguts über die Breite der Aufbereitungswalzen erfasst werden und der berechnete Volumenstrom des Ernteguts entspricht vorteilhaft exakter der tatsächlich geernteten Erntegutmenge.

Nach einer weiteren vorteilhaften Weiterbildung wird am Mähwerk ein Feuchtesensor vorgesehen, der den Feuchtegehalt des Ernteguts erfasst und die sich ändernden Feuchtegehalte kontinuierlich an die Steuerungseinrichtung übermittelt, woraus diese in Verbindung mit dem Volumenstrom vorteilhaft eine Trockenmasse des geernteten Ernteguts ermittelt.

Nach einer weiteren vorteilhaften Weiterbildung sind in der Steuerungseinrichtung Kalibrierkennlinien zur Kalibrierung des Feuchtesensors hinterlegt und die Steuerungseinrichtung kann abhängig vom Volumenstrom des Ernteguts eine Korrektur der Feuchtegehalte errechnen. Dadurch erfolgt die Berechnung der Trockenmasse vorteilhaft exakter.

Nach einer weiteren vorteilhaften Weiterbildung empfängt die Steuerungseinrichtung Positionsdaten eines Global Positioning Systems (GPS) und verknüpft diese mit dem jeweils aktuellen Volumenstrom oder der Trockenmasse des Ernteguts und erstellt damit vorteilhaft eine Ertragskartierung, aus welcher erkennbar ist, welche Menge an Erntegut an welcher Position gemäht bzw. geerntet wurde.

Aus den daraus hervorgehenden ortsbezogenen Ertragsdaten können Betriebsparameter der in der Erntekette nachfolgenden landwirtschaftlichen Maschinen frühzeitig an die Erfordernisse angepasst werden. Beispielsweise kann bei Annäherung an eine Position mit geringerem Ertrag durch eine gezielte Absenkung der Motorleistung Kraftstoff gespart werden. Es ist auch vorteilhaft möglich, die Einstellungen von Anbaugeräten an Traktoren rechtzeitig an die Ertragsmengen anzupassen. Anhand der Feuchtegehalte, die ebenfalls in der Ertragskarte vermerkt werden können, ist es beispielsweise vorteilhaft möglich, Hinweise für nachfolgende landwirtschaftliche Maschinen zu generieren, die beispielsweise vor Wasserlöchern warnen.

Weiterhin können die ortsbezogenen Ertragsdaten dafür genutzt werden, um den rechtlichen Anforderungen zur Dokumentation bei der Ausbringung von Düngemittel gerecht zu werden. Außerdem ist es anhand der Ertragskarte möglich, Düngemittel gezielter auszubringen, wodurch vorteilhaft Düngemittel eingespart werden kann.

Bevorzugte Weiterbildungen der Erfindung ergeben sich aus den Unteransprüchen und der Beschreibung. Nachfolgend werden die Merkmale der vorliegenden Erfindung anhand von Ausführungsbeispielen, ohne hierauf beschränkt zu sein, näher erläutert. In den zugehörigen schematischen Zeichnungen zeigt, die
- Fig. 1: eine Seitenansicht eines erfindungsgemäßen Mähwerks mit einer ersten Menge von Erntegut,
- Fig. 2: eine Seitenansicht eines erfindungsgemäßen Mähwerks mit einer größeren Menge von Erntegut und die
- Fig. 3: eine Ansicht eines erfindungsgemäßen Mähwerks in Gutflussrichtung von gemähtem Erntegut.

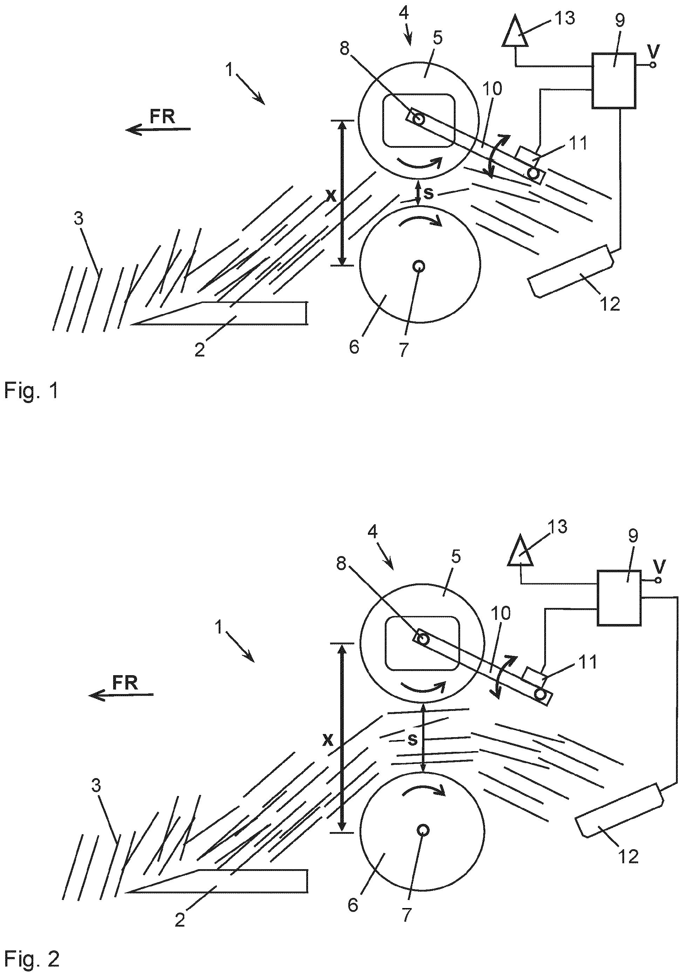

Fig. 1 zeigt eine stark schematisierte Seitenansicht eines erfindungsgemäßen Mähwerks 1 mit einem Mähbalken 2, der aus mehreren nebeneinander positionierten Mähorganen besteht, und dem in Gutflussrichtung von gemähtem Erntegut 3 gesehen, ein Walzenaufbereiter 4 nachgeordnet ist. Der Walzenaufbereiter 4 umfasst eine obere Aufbereitungswalze 5 und eine untere Aufbereitungswalze 6, zwischen welchen ein Spalt s gebildet ist und zwischen welchen das Erntegut 3 hindurch transportiert wird. Die obere Aufbereitungswalze 5 dreht sich um eine Drehachse 8 gegen den Uhrzeigerdrehsinn und die untere Aufbereitungswalze 6 im Uhrzeigerdrehsinn um eine untere Drehachse 7, wobei sich der Spalt s abhängig von einer Menge des Ernteguts 3, welches zwischen den Aufbereitungswalzen 5, 6 hindurchtransportiert oder hindurchgefördert wird, verändert.

Die untere Drehachse 7 der unteren Aufbereitungswalze 6 ist ortsfest angeordnet und die obere Drehachse 8 der oberen Aufbereitungswalze 5 ist zur Anpassung des Spaltes s an die Menge des Erntegutes 3 verlagerbar angeordnet, so dass sich der Abstand x der Drehachsen 7, 8 und die Weite des Spaltes s verändern kann. Dazu ist die obere Drehachse 8 schwenkbar an Hebeln 10 angeordnet und an einem der Hebel 10 ist ein Winkelsensor 11 vorgesehen, der die Auslenkung des Hebels 10 kontinuierlich erfasst und die erfassten Messsignale an eine Steuerungseinrichtung 9 übermittelt.

Zur Ermittlung der Weite des Spaltes s können alternativ oder zusätzlich andere Sensoren vorgesehen werden, wie beispielsweise optische Sensoren oder Seilzugsensoren.

Das Mähwerk 1 wird in allgemein bekannter Weise von einem Trägerfahrzeug, wie einem Traktor, aufgenommen, angetrieben und zum Ernteprozess in Fahrtrichtung FR bewegt. Die dabei erreichte Fahrgeschwindigkeit V oder Erntegeschwindigkeit V kann über eine Datenverbindung, vorzugsweise ein sogenannter ISOBUS, kontinuierlich vom Traktor übernommen werden und der Steuerungseinrichtung 9 zugeführt werden. Alternativ kann zur Erfassung der Fahrgeschwindigkeit V bzw. Erntegeschwindigkeit V eine entsprechende Sensorik am Mähwerk 1 vorgesehen werden, welche diese kontinuierlich an die Steuerungseinrichtung 9 übermittelt.

Die Steuerungseinrichtung 9 ist dazu eingerichtet, aus den an sie übermittelten Messwerten des Winkelsensors 11 und der in ihr abgespeicherten Geometriedaten des Hebels 10 kontinuierlich die Weite des Spaltes s zu errechnen und über die, ebenfalls in ihr abgespeicherte, Breite b der Aufbereitungswalzen 5, 6 einen Durchgangsquerschnitt des Ernteguts 3 zu ermitteln. Weiterhin ist die Steuerungseinrichtung 9 dazu eingerichtet, den Durchgangsquerschnitt zwischen den Aufbereitungswalzen 5, 6 mit der aktuellen Fahrgeschwindigkeit V bzw. der Erntegeschwindigkeit V zu verrechnen, um einen Volumenstrom des Erntegutes 3 zu berechnen, der eine Näherung für die Menge des gemähten Ernteguts 3 darstellt.

In dem dargestellten Ausführungsbeispiel ist auch ein Feuchtesensor 12 vorgesehen, der den Feuchtegehalt des gemähten Ernteguts 3 erfasst und die Feuchtegehalte kontinuierlich an die Steuerungseinrichtung 9 übermittelt. Die Steuerungseinrichtung 9 ermittelt daraus in Verbindung mit dem Volumenstrom eine Trockenmasse des geernteten Ernteguts 3. Es ist auch möglich, über die Breite b der Aufbereitungswalzen 5, 6 verteilt mehrere Feuchtesensoren 12 anzuordnen, um den Feuchtegehalt an verschiedenen Stellen des Gutflusses zu erfassen.

In der Steuerungseinrichtung 9 sind vorzugsweise Kalibrierkennlinien zur Kalibrierung des Feuchtesensors 12 oder der mehreren Feuchtesensoren 12 hinterlegt, womit die Steuerungseinrichtung 9 abhängig vom Volumenstrom des Ernteguts 3 eine Korrektur der Feuchtegehalte errechnet und bei der Berechnung der Trockenmasse des Ernteguts 3 berücksichtigt.

Beim Einsatz von kapazitiv wirkenden Feuchtesensoren 12 ist es wichtig, diese an einer Stelle des Gutflusses anzuordnen, wo das Erntegut 3 eine konstante Schichtdicke aufweist.

Zur Messung des Feuchtegehalts können alternativ oder zusätzlich Nahinfrarot-Sensoren (NIR-Sensoren) vorgesehen werden. Selbstverständlich ist es auch möglich, andere Sensorsysteme vorzusehen, die dazu geeignet sind, den Feuchtegehalt von Erntegut zu ermitteln.

Weiterhin ist die Steuerungseinrichtung 9 dazu eingerichtet, Positionsdaten eines GPS-Systems 13 zur Bestimmung der aktuellen Position des Mähwerks 1 zu empfangen, diese mit dem ermittelten aktuellen Volumenstrom oder der ermittelten aktuellen Trockenmasse des Ernteguts 3 zu verknüpfen und damit eine Ertragskartierung zu erstellen. Aus der erstellten Ertragskarte kann entnommen werden, wieviel Trockenmasse an Erntegut 3 an welcher Position gemäht bzw. geerntet wurde. Ebenso könnte alternativ der Volumenstrom abhängig von der Position ausgelesen werden.

Die Steuerungseinrichtung 9 kann die Ertragskarte und/oder weitere der ermittelten Daten einem übergeordneten Datensystem bereitstellen, auf welches andere an der Erntekette beteiligte Maschinen zugreifen können. Aus den ortsbezogenen Daten der Ertragskarte können Betriebsparameter der in der Erntekette nachfolgenden landwirtschaftlichen Maschinen frühzeitig an die Erfordernisse angepasst werden. Beispielsweise kann bei Annäherung an eine Position mit geringerem Ertrag durch eine gezielte Absenkung der Motorleistung Kraftstoff gespart werden. Bei der Annäherung an eine Position oder an ein Gebiet mit größerer Ertragsmenge kann die Motorleistung andererseits rechtzeitig an den höheren Bedarf angepasst werden. Dadurch können vorteilhaft Verzögerungen in der Erntekette vermieden werden.

In der Ertragskarte können zusätzlich die Feuchtewerte verzeichnet werden, woraus Hinweise für nachfolgende landwirtschaftliche Maschinen generiert werden können, um beispielsweise an besonders feuchten Positionen, vor Wasserlöchern zu warnen.

Die Fig. 2 zeigt eine weitere stark schematisierte Seitenansicht eines erfindungsgemäßen Mähwerks 1 mit einer größeren Menge von Erntegut 3 gegenüber der Ansicht in Fig. 1. Es ist ersichtlich, dass der Abstand x der Drehachsen 7, 8 und der Spalt s zwischen den Aufbereitungswalzen 5, 6 wesentlich größer sind als in Fig. 1. D.h. in dieser Seitenansicht des Mähwerks 1 wird dargestellt, wie eine größere Menge an Erntegut 3 gemäht und zwischen den Aufbereitungswalzen 5, 6 verarbeitet, insbesondere für eine schnellere Trocknung aufbereitet, wird.

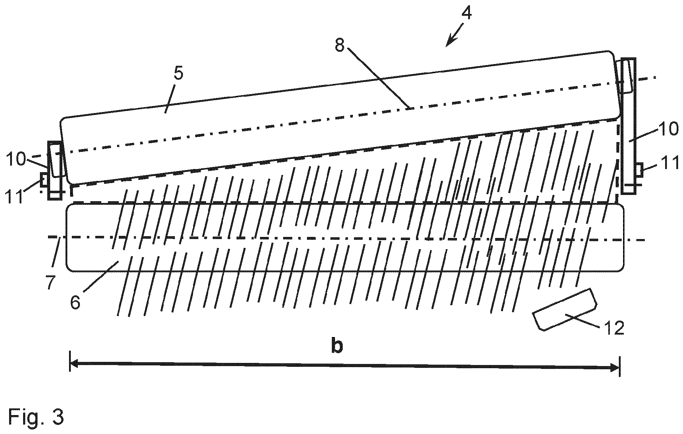

Die Fig. 3 zeigt eine Ansicht in Flussrichtung des gemähten Ernteguts 3. Dabei ist ersichtlich, dass die obere Aufbereitungswalze 5 jeweils an ihren beiden Enden oder Stirnseiten schwenkbar an einem Hebel 10 gelagert ist, um den Abstand x bzw. den Spalt s an unterschiedlich große Mengen von Erntegut 3 anzupassen. Dabei ist vorzugsweise an jedem Hebel 10 ein Winkelsensor 11 vorgesehen, welche die erfassten Messsignale an die Steuerungseinrichtung 9 übermitteln. Die Steuerungseinrichtung 9 ermittelt aus den beiden Messignalen eine etwaige Verkippung oder Schrägstellung der oberen Aufbereitungswalze 5 (wie sie beispielhaft in Fig. 3 dargestellt ist) und errechnet daraus kontinuierlich einen der Schrägstellung oder Verkippung entsprechenden Durchgangsquerschnitt (in Fig. 3 als Strichlinie eingezeichnet), durch welchen das Erntegut 3 hindurchgefördert wird. Dieser Durchgangsquerschnitt wird zur Berechnung des Volumenstroms des Ernteguts (3) herangezogen.

In der vorangehenden Beschreibung wurde das Mähwerk 1 sehr stark schematisiert dargestellt und auch nur die Bauteile beschrieben, welche für die vorliegende Erfindung relevant sind. Selbstverständlich weist ein erfindungsgemäßes Mähwerk 1 auch alle weiteren allgemein üblichen und dem Fachmann hinlänglich bekannten Bauteile auf.

### Bezugszeichenliste

- 1: Mähwerk
- 2: Mähbalken
- 3: Erntegut
- 4: Walzenaufbereiter
- 5: Aufbereitungswalze
- 6: Aufbereitungswalze
- 7: Drehachse
- 8: Drehachse
- 9: Steuerungseinrichtung
- 10: Hebel
- 11: Winkelsensor
- 12: Feuchtesensor
- 13: GPS-System

- x: Abstand
- s: Spalt
- b: Breite
- FR: Fahrtrichtung/Ernterichtung
- V: Fahrgeschwindigkeit/Erntegeschwindigkeit

## Patentansprüche

1. Mähwerk (1), mit mehreren Mähorganen, die unter Ausbildung eines Mähbalkens (2) nebeneinander positioniert sind und mit einem in Gutflussrichtung von gemähtem Erntegut (3) gesehen hinter dem Mähbalken (2) angeordneten Walzenaufbereiter (4), der eine obere Aufbereitungswalze (5) und eine untere Aufbereitungswalze (6) aufweist, wobei ein Spalt (s) zwischen den Aufbereitungswalzen (5, 6), durch welchen das Erntegut (3) hindurch transportiert wird, abhängig von einer Menge des Ernteguts (3) veränderlich ist, **gekennzeichnet, durch** Mittel zur Ermittlung einer Weite des Spaltes (s) und Mittel zur Ermittlung einer Fahrgeschwindigkeit (V) oder Erntegeschwindigkeit (V) sowie eine Steuerungseinrichtung (9), die dazu eingerichtet ist, aus der Weite des Spaltes (s), einer Breite (b) der Aufbereitungswalzen (5, 6) und der Fahrgeschwindigkeit (V) oder der Erntegeschwindigkeit (V) einen Volumenstrom des Erntegutes (3) zu berechnen.

2. Mähwerk (1) nach Anspruch 1, **dadurch gekennzeichnet, dass** die untere Aufbereitungswalze (6) um eine untere, ortsfeste Drehachse (7) drehbar ist und die obere Aufbereitungswalze (5) zur Anpassung des Spaltes (s) an die Menge des Erntegutes (3) um eine obere, verlagerbare Drehachse (8) drehbar ist, so dass die obere Drehachse (8) relativ zur unteren Drehachse (7) verlagerbar ist, wobei die obere Drehachse (8) dazu schwenkbar an Hebeln (10) angeordnet ist und ein Winkelsensor (11) vorgesehen ist, der die Auslenkung eines Hebels (10) kontinuierlich erfasst und die erfassten Messsignale an die Steuerungseinrichtung (9) übermittelt.

3. Mähwerk (1) nach Anspruch 2, **dadurch gekennzeichnet, dass** die obere Aufbereitungswalze (5) an ihren beiden Enden schwenkbar an einem Hebel (10) gelagert ist und an jedem Hebel (10) ein Winkelsensor (11) vorgesehen ist, die beide die erfassten Messsignale an die Steuerungseinrichtung (9) übermitteln, woraus diese eine etwaige Verkippung oder Schrägstellung der oberen Aufbereitungswalze (5) ermittelt und bei der Berechnung des Volumenstroms des Ernteguts (3) berücksichtigt.

4. Mähwerk (1) nach einem der vorhergehenden Ansprüche, **dadurch gekennzeichnet, dass** ein Feuchtesensor (12) vorgesehen ist, der den Feuchtegehalt des Ernteguts (3) erfasst und die Feuchtegehalte kontinuierlich an die Steuerungseinrichtung (9) übermittelt, woraus diese in Verbindung mit dem Volumenstrom eine Trockenmasse des geernteten Ernteguts (3) ermittelt.

5. Mähwerk (1) nach Anspruch 4, **dadurch gekennzeichnet, dass** in der Steuerungseinrichtung (9) Kalibrierkennlinien zur Kalibrierung des Feuchtesensors (12) hinterlegt sind und die Steuerungseinrichtung (9) abhängig vom Volumenstrom des Ernteguts (3) eine Korrektur der Feuchtegehalte errechnet.

6. Mähwerk (1) nach einem der vorhergehenden Ansprüche, **dadurch gekennzeichnet, dass** die Steuerungseinrichtung (9) Positionsdaten eines GPS-Systems (13) empfängt und diese mit dem aktuellen Volumenstrom oder einer Trockenmasse des Ernteguts (3) verknüpft und damit eine Ertragskarte erstellt.
